# EUROPÄISCHE PATENTANMELDUNG

(11) **EP 0 658 667 A1**
(43) Veröffentlichungstag der Anmeldung: **21.06.1995**
(21) Anmeldenummer: 94117644.8
(22) Anmeldetag: 09.11.1994
(51) Int. Cl.: E04F 13/08, E04F 13/04, F16B 21/20, F16B 19/00

(54) **Isolierdorn-Dübel aus Metall**

(30) Priorität: 16.12.1993 DE 4343030
(71) Anmelder: "TOGE-DÜBEL" A. Gerhard GmbH, D-90431 Nürnberg (DE)
(72) Erfinder: Gerhard, Anton, D-90431 Nürnberg (DE)
(74) Vertreter: Rau, Manfred, Dr. Dipl.-Ing.

(57) **Zusammenfassung**

Ein Isolierdorn-Dübel (1) aus Metall weist eine Spreizhülse (2) auf, an deren einem Ende ein eine mittlere Öffnung aufweisender Halteteller (3) angebracht ist. Der Halteteller (3) weist einen in die Spreizhülse (2) umgebogenen Innen-Randbereich (17) mit einem die Öffnung begrenzenden Innen-Rand (20) auf. Weiterhin ist eine Abdeckkappe (21) aus einem elastisch nachgiebigen Material geringer Wärmeleitfähigkeit vorgesehen, die einen Abdeckteller (22) und einen von diesem vorstehenden Haltezapfen (23) aufweist, wobei der Außendurchmesser des Haltezapfens (23) größer ist als der Innendurchmesser des Innen-Randbereiches (17).

## Beschreibung

Die Erfindung betrifft einen Isolierdorn-Dübel nach dem Oberbegriff des Anspruches 1.

Derartige bekannte Isolierdorn-Dübel weisen eine elastisch zusammendrückbare Spreizhülse auf, an deren einem Ende ein ringförmiger Halteteller angebracht ist, der eine mittlere zur Spreizhülse konzentrische Öffnung aufweist. Derartige Isolierdorn-Dübel werden zur Befestigung von Isolierplatten an Hauswänden und dgl. verwendet. Hierbei wird die Isolierplatte gegen die Mauer gedrückt und dann ein Bohrloch durch die Platte in die Mauer gesetzt. Das Bohrloch in der Mauer hat gegenüber der Spreizhülse leichtes Untermaß. Der Isolierdorn-Dübel wird dann durch das Loch in der Isolierplatte in das Bohrloch in der Mauer eingetrieben, und zwar in der Regel mit leichten Hammerschlägen. Hierbei wird die Spreizhülse leicht zusammengedrückt und verspannt sich elastisch im Bohrloch. Die Isolierplatten werden sehr oft mit einer Putzschicht verkleidet, deren Haften am Halteteller dadurch erleichtert wird, daß dieser mit Durchbrüchen od.dgl. als Hafthilfen versehen ist. Bei stark wechselnden klimatischen Bedingungen besteht aufgrund der guten Wärmeleitfähigkeit des Metalls die Gefahr, daß der Taupunkt im Bereich des Haltetellers niedriger ist als in benachbarten Bereichen, was zur Folge haben kann, daß dort in der Putzschicht die Feuchtigkeit etwas höher ist als in anderen Bereichen, was auf die Dauer zu Verfärbungen, d.h. zu Fleckenbildungen führt. Die Isolierdorn-Dübel bestehen aus Metall, weil derartige Ausgestaltungen außerordentlich kostengünstig sind und die verwendeten Bleche bruchfest sind.

Zur Vermeidung der vorstehend angesprochenen Probleme ist es aus der DE 37 17 429 A bereits bekannt geworden, einen solchen Isolierdorn-Dübel aus Kunststoff herzustellen, wobei ein inneres Spreizelement allerdings notwendig ist. Der Halteteller 3 wird hierbei durch eine angelenkte Abdeckkappe verschlossen. Dieser Dübel beseitigt das Problem der Kältebrücken und damit das Problem der Fleckenbildung; er ist aber kostenaufwendiger als ein Isolierdorn-Dübel aus Metall, wie er vorstehend geschildert wurde.

Der Erfindung liegt die Aufgabe zugrunde, einen Isolierdorn-Dübel der gattungsgemäßen Art in einfacher Weise so auszugestalten, daß der Halteteller gegenüber der Umgebung gut wärmeisoliert ist.

Diese Aufgabe wird erfindungsgemäß durch die Merkmale im Kennzeichnungsteil des Anspruches 1 gelöst.

Bei der erfindungsgemäßen Lösung wird darauf zurückgegriffen, eine im Grundsatz bekannte zusätzliche Abdeckkappe vorzusehen, die in der Regel aus Kunststoff besteht, wobei aber die Befestigung der Abdeckkappe am Isolierdorn-Dübel so gelöst ist, daß eine Montage der Abdeckkappe zwar durch einfaches Aufstecken möglich ist, daß diese dann aber derart fest am Isolierdorn-Dübel sitzt, daß sie als Träger für eine Putzschicht dienen kann. Die Einzelheiten dieser Ausgestaltung ergeben sich aus den Ansprüchen 2 bis 5. Eine weitere Verbesserung der Isolierwirkung der Abdeckkappe ergibt sich aus den Ansprüchen 6 und 7.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: einen Isolierdorn-Dübel mit einer Abdeckkappe in perspektivischer Explosions-Darstellung,
- Fig. 2: einen Teil-Längsschnitt durch den Isolierdorn-Dübel nach Fig. 1,
- Fig. 3: einen Längsschnitt durch die Abdeckkappe nach Fig. 1 und
- Fig. 4: eine Teildarstellung einer an einer Mauer mittels eines Isolierdorn-Dübels mit Abdeckkappe befestigten und mit einer Putzschicht versehenen Isolierplatte.

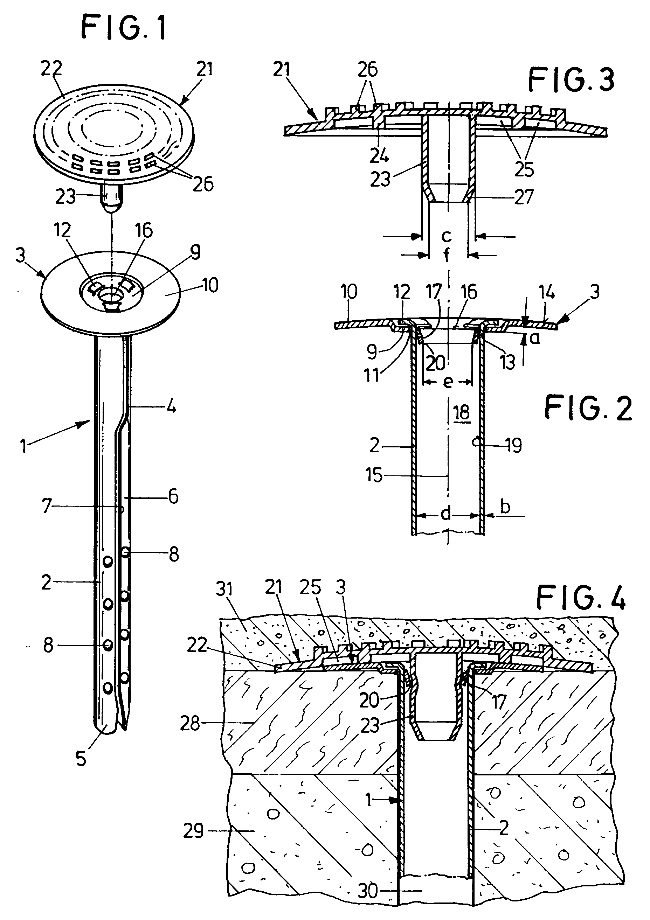

Ein in der Zeichnung dargestellter Isolierdorn-Dübel 1 besteht aus Metall, also aus Metallblech. Er besteht im wesentlichen aus einer Spreizhülse 2 und einem an deren einem Ende befestigten Halteteller 3. Die Spreizhülse 2 weist im wesentlichen einen kreisförmigen Querschnitt auf und ist mit einem über ihre volle Länge durchgehenden Schlitz 4 versehen. Über einen wesentlichen Teil der Länge der Spreizhülse 2, und zwar beginnend von deren Einschubende 5 an, sind die den Schlitz 4 begrenzenden Kanten 6, 7 der Spreizhülse 2 nach innen eingebogen, wie aus Fig. 1 ersichtlich ist. Hierdurch wird die Elastizität der Spreizhülse 2 erhöht. Benachbart zu diesen Kanten 6, 7 sind in der Spreizhülse 2 Öffnungen 8 oder kleine Vorsprünge od.dgl. ausgebildet, die die Verankerung der Spreizhülse 2 in einem Bohrloch fördern. Insoweit, als der Isolierdorn-Dübel 1 bis hier her beschrieben ist, ist er seit langem bekannt und in der Praxis mit großem Erfolg im Einsatz.

Der Halteteller 3 ist beispielsweise kreisringförmig ausgebildet. Er weist einen inneren Ringabschnitt 9 auf, der gegenüber einem äußeren Ringabschnitt 10 zur Spreizhülse 2 um ein Maß a zurückgesetzt ist, das etwa gleich oder geringfügig größer der Wanddicke b der Spreizhülse 2 ist. Im inneren Ringabschnitt 9 sind in gleichen Winkelabständen beispielsweise drei schlitzartige Durchstecköffnungen 11 ausgebildet, durch die im Querschnitt angepaßte Haltelaschen 12 hindurchgesteckt sind, die über den Rand 13 der Spreizhülse 2 hinausragen, an dem der Halteteller 3 mit seinem inneren Ringabschnitt 9 anliegt, wie insbesondere Fig. 2 entnehmbar ist. Die Haltelaschen 12 sind - wie den Fig. 1 und 2 entnehmbar ist - nach außen umgebogen und liegen gegen den inneren Ringabschnitt 9 des Haltetellers an. Aufgrund des Rücksprungs des inneren Ringabschnittes 9 gegenüber dem äußeren Ringabschnitt 10 ragen die umgebogenen Haltelaschen 12 nicht über die freiliegende Stirnseite 14 des äußeren Ringabschnittes 10 vor. Mittels dieser Haltelaschen 12 ist der Halteteller 3 fest an der Spreizhülse 2 befestigt.

Der innere Ringabschnitt 9 begrenzt eine mit der Mittel-Längs-Achse 15 der Spreizhülse 2 konzentrische Einstecköffnung 16, zwischen der und den Durchstecköffnungen 11 der innere Ringabschnitt 9 einen Innen-Randbereich 17 aufweist. Wie Fig. 2 entnehmbar ist, ist dieser Innen-Randbereich 17 vom Rand 13 der Spreizhülse 2 weg nach innen in deren Innenraum 18 umgebogen, und zwar bis in die Nähe von deren Innenwand 19. Der relativ scharfkantige, die Einstecköffnung 16 begrenzende Innen-Rand 20, der also den Innen-Randbereich 17 nach innen begrenzt, steht geringfügig von der Innenwand 19 der Spreizhülse 2 ab, d.h. der Innen-Randbereich 17 verjüngt sich vom Halteteller 3 weg leicht entsprechend einem Kegelstumpf eines Kegels mit ganz kleinem Öffnungswinkel.

Es ist eine Abdeckkappe 21 vorgesehen, die aus einem Abdeckteller 22 und einem einstückig hiermit ausgebildeten Haltezapfen 23 besteht. Die Abdeckkappe 21 besteht im Gegensatz zum Isolierdorn-Dübel 1 aus Kunststoff. Der Abdeckteller 22 ist - wie insbesondere den Fig. 2 und 3 entnehmbar ist - größer ausgebildet als der Halteteller 3. Er weist auf seiner dem Haltezapfen 23 zugeordneten Seite stegartige Vorsprünge 24 auf, die beim Befestigen der Abdeckkappe 21 am Dübel 1 bewirken, daß der Abdeckteller 22 nicht flächig gegen den Halteteller 3 anliegt, sondern daß nur eine geringe Anlage erfolgt und dazwischen Luftkammern 25 mit entsprechender Isolierwirkung gebildet werden. Auf der Außenseite, also auf der dem Haltezapfen 23 abgewandten Seite ist der Abdeckteller 22 mit noppenartigen Vorsprüngen 26 versehen, die dazu dienen, daß Putz auf dem Abdeckteller 22 auch mechanisch haften kann.

Der Haltezapfen 23 der Abdeckkappe 21 ist hohl ausgebildet, und zwar im wesentlichen zylindrisch. Er weist im Bereich seines freien Endes eine Verjüngung 27 als Einsteckhilfe auf. Der Außendurchmesser c des Haltezapfens 23 ist kleiner als der Innendurchmesser d der Spreizhülse 2 in ihrem dem Halteteller 3 benachbarten Bereich, wo die Kanten 6, 7 nicht nach innen eingezogen sind. Der Außendurchmesser c des Haltezapfens 23 ist dagegen größer als der Innendurchmesser e des Innen-Randes 20 des Innen-Randbereichs 17. Der Außendurchmesser f der Verjüngung 27 an ihrer engsten Stelle ist dagegen wiederum kleiner als der Innendurchmesser e des Innen-Randes 20, so daß ein Einführen des Haltezapfens 23 in den in die Spreizhülse 2 umgebogenen Innen-Randbereich 17 ohne weiteres möglich ist. Beim Aufsetzen der Abdeckkappe 21 auf den Isolierdorn-Dübel 1, d.h. beim Eindrücken des Haltezapfens 23 in den Innen-Rand 20 des Haltetellers 3 wird der aus elastischem Kunststoff bestehende, relativ dünnwandige Haltezapfen 23 elastisch nach innen verformt. Aufgrund der sich leicht verjüngenden Form des Innen-Randbereiches 17 geht somit das Einschieben des Haltezapfens 23 verhältnismäßig leicht vonstatten. Es kann von einem Arbeiter mit geringer Kraft von Hand, d.h. ohne Zuhilfenahme von Werkzeugen, ausgeführt werden. Wie insbesondere Fig. 4 entnehmbar ist, weitet sich der Haltezapfen 23 hinter dem Innen-Rand 20 wieder auf, so daß der relativ scharfkantige Innen-Rand 20 wie ein Widerhaken im Haltezapfen 23 ist. Ein Herausziehen des Haltezapfens 23 aus der Spreizhülse 2, d.h. ein Abziehen der Abdeckkappe 21 vom Isolierdorn-Dübel 1 ist somit nur sehr schwer möglich. Die hierfür erforderlichen Auszugskräfte sind sehr groß. Die auf die geschilderte Weise am Isolierdorn-Dübel 1 befestigte Abdeckkappe 21 sitzt so fest, daß sie ein ausreichend fester Träger für Putz ist.

In Fig. 4 ist angedeutet, wie mittels eines Isolierdorn-Dübels 1 eine Isolierplatte 28 an einer Mauer 29 befestigt wird. Der Isolierdorn-Dübel 1 ist hierzu in ein Bohrloch 30 eingesteckt, das durch die Isolierplatte 28 hindurch in die Mauer 29 gesetzt ist. Dieses Bohrloch 30 hat in üblicher Weise gegenüber dem unverspannten Isolierdorn-Dübel 1 Untermaß, so daß die Spreizhülse 2 sich nach dem Einführen im Bohrloch 30 in der Mauer 29 verspannt. Der Halteteller 3 liegt gegen die Außenseite der Isolierplatte 28 an und hält diese fest an der Mauer 29. Anschließend wird die Abdeckkappe 21 in der geschilderten Weise fest auf dem Isolierdorn-Dübel 1 befestigt, wodurch deren Abdeckteller 22 den Halteteller 3 voll überdeckt. Nunmehr kann die Isolierplatte 28 mit einer Putzschicht 31 versehen werden, die auch die Abdeckkappe 21 überdeckt und auf dieser haftet. Obwohl der Isolierdorn-Dübel 1 aus Metall besteht, treten keine sogenannten Kältebrücken auf, die den Taupunkt im Bereich des Haltetellers 3 so weit herabsetzen, daß in der Putzschicht 31 Feuchtigkeitsflecken auftreten. Die Abdeckkappe 21 verhindert dies wirksam.

Die geschilderten Maßnahmen zur Befestigung der Abdeckkappe 21 sind in gleicher Weise vorteilhaft anwendbar, wenn diese nur dazu dient, den Halteteller 3 optisch zu verkleiden bzw. zu verblenden, wenn also der mittels des Isolierdorn-Dübels 1 befestigte Gegenstand nicht mit einer Putzschicht 31 versehen wird. Die Befestigung der Abdeckkappe 21 ist in gleicher Weise anwendbar, wenn die Spreizhülse 2 mittels eines eingetriebenen Stiftes oder einer Schraube aufgespreizt wird. Entscheidend ist nur, daß der kurze Bereich benachbart zum Halteteller 3 zur Aufnahme des Haltezapfens 23 frei ist. Des weiteren kann der Dübel 1 mit vormontierter Abdeckkappe 21 geliefert und eingesetzt werden.

## Patentansprüche

1. Isolierdorn-Dübel aus Metall, mit einer Spreizhülse (2), an deren einem Ende ein eine mittlere Öffnung (16) aufweisender Halteteller (3) angebracht ist, dadurch gekennzeichnet, daß der Halteteller (3) einen in die Spreizhülse (2) umgebogenen Innen-Randbereich (17) mit einem die Öffnung (16) begrenzenden Innen-Rand (20) aufweist und daß eine Abdeckkappe (21) aus einem elastisch nachgiebigen Material geringer Wärmeleitfähigkeit vorgesehen ist, die einen Abdeckteller (22) und einen von diesem vorstehenden Haltezapfen (23) aufweist, wobei der Außendurchmesser (c) des Haltezapfens (23) größer ist als der Innendurchmesser (c) des Innen-Randbereiches (17).

2. Isolierdorn-Dübel nach Anspruch 1, dadurch gekennzeichnet, daß der Außendurchmesser (c) des Haltezapfens (23) größer ist als der Innendurchmesser (e) des Innen-Randes (20).

3. Isolierdorn-Dübel nach Anspruch 1 oder 2, dadurch gekennzeichnet, daß der Innen-Randbereich (17) sich zum Innen-Rand (20) hin leicht verjüngt.

4. Isolierdorn-Dübel nach einem der Ansprüche 1 bis 3, dadurch gekennzeichnet, daß mindestens der Haltezapfen (23) aus Kunststoff besteht.

5. Isolierdorn-Dübel nach Anspruch 4, dadurch gekennzeichnet, daß die Abdeckkappe (21) einstückig ausgebildet ist.

6. Isolierdorn-Dübel nach einem der Ansprüche 1 bis 5, dadurch gekennzeichnet, daß der Abdeckteller (22) unter Bildung von Luftkammern (25) gegen den Halteteller (3) anliegt.

7. Isolierdorn-Dübel nach Anspruch 6, dadurch gekennzeichnet, daß am Abdeckteller (22) gegen den Halteteller (3) anliegende Vorsprünge (26) ausgebildet sind.
